# EUROPEAN PATENT APPLICATION

(11) **EP 2 876 588 A1**
(43) Date of publication of application: **27.05.2015**
(21) Application number: 12881425.8
(22) Date of filing: 17.07.2012
(51) Int. Cl.: G06Q 10/06

(54) **WORKFLOW MANAGEMENT DEVICE AND WORKFLOW MANAGEMENT METHOD**

(71) Applicant: Creo Networks Co., Ltd., Tokyo 108-0075 (JP)
(72) Inventor: IWASAKI, Hidetoshi, Tokyo 108-0075 (JP)
(74) Representative: Grünecker Patent- und Rechtsanwälte PartG mbB
(86) International application number: PCT/JP2012/068123
(87) International publication number: WO 2014/013551

(57) **Abstract**

Provided is a versatile workflow system capable of managing not only a document routing workflow but also all the work from work placement to completion. Information of an action executable in a certain status is received from a terminal of an administrator, combination information of the status and the action executable in the status is stored in an action storage section, information of the action and action elements making up the action is received from the terminal of the administrator, and combination information of the action and the action elements making up the action is stored in an action-element storage section. All the actions extracted from the action storage section with the status as a key are displayed on a terminal of a user as the actions executable by the user. Information of a selected action selected from the displayed actions is received from the terminal of the user, the action-element storage section is referred to, and all the action elements making up the selected action are extracted and executed.

## Description

### Technical Field

The present invention relates to a workflow management device and a workflow management method for displaying a status at the time point in a task flow of a task item and at the same time to a user, providing a workflow system with which the user is capable of executing task actions in accordance with the status.

### Background Art

In recent years, in order to computerize approval procedures of in-house decision requests, reports, and notifications to improve speed, enhance task efficiency, and strengthen internal control, a workflow system is widely used (for example, Patent Document 1).

The conventional workflow system as in Patent Document 1 is implemented in a form of computerizing paper, routing computerized paper to concerned persons, and leaving an approval trail.

Functions required for routing of texts such as applying, returning, approving, and approving by proxy are limited. Thus, functions corresponding to these actions can be implemented in advance, and the order to execute the actions can be defined by a workflow tool.

However, in many of actual work scenes, the kind of actions is not limited to applying and approving. There are countless kinds of actions such as requesting, confirming, and telephoning depending on contents of work and a progress stage of the work. Thus, there is a functional limitation to apply the conventional workflow system to every task flow.

The design concept of the conventional workflow system can be realized in a case where the kind of actions is limited as in a document routing workflow but is not suitable for a specification that a work state is managed over all other task processes. In a case where an individual action is realized, individual program development is required, and the conventional workflow is limited in terms of use.

The conventional system has an easy-to-understand theme to realize a paperless system and reduce trouble and cost. However, an actual situation is that in a normal task, in addition to a task to be handled by such a workflow system, other workflows exist non-systemized.

For example, there are a task list managed by a list created by spreadsheet software, work requests and information exchanges by E-mails, and the like. There are various in-house tasks such as an inquiry receiving task, an exchange of order receipt and placement with a business partner, and a procedure of product shipment.

Regarding these tasks, the work is also performed in accordance with a fixed task flow. However, there are various kinds of tasks and exchanges and the conventional approval-type workflow cannot manage such a flow. A workflow system required at this time is to define a flow of a task procedure and exchange information along the flow, and is not limited to a flow to target at routing and approval of a document. The workflow system should manage the whole form that in many cases, item information flows while going back and forth over plural organizations and business partners.

Normally, in a case of promoting efficiency of such a case by systemization more, a task load is reduced often by introducing package software unique to the task or performing systemization by using spreadsheet software or the like. However, these systems are unique to an organization, and many operations generated from such an actual situation often exist in the organization as invisible cost. For example, a work (task) flow from work placement to completion by E-mail and telephone communication and the like are not easily brought to the surface as an actual situation, and inefficiency thereof, lack of much information, neglect of tasks, delay, trouble of retry of tasks are not exposed.

Patent Document 1: JP 2007-265198 A ([0048] to [0064], [Fig. 1], [Fig. 6])

### DISCLOSURE OF THE INVENTION

### Problem to be Solved by the Invention

The present invention is achieved in consideration with the above circumstance, and an object thereof is to provide a workflow management device and a workflow management method capable of providing a versatile workflow system that is capable of managing, visualizing, and promoting efficiency of not only a workflow to route and share a document but all the work from work placement to completion.

Another object of the present invention is to provide a workflow management device and a workflow management method realized as a software product capable of being commonly used over a large number of organizations and corporations.

Still another object of the present invention is to provide a workflow management device and a workflow management method capable of creating actions to be executed by a user in a workflow system with no programming knowledge by combining action elements serving as fundamental parts prepared in advance.

Yet another object of the present invention is to provide a workflow management device and a workflow management method capable of providing a highly flexible workflow system suitable for all task processes, the workflow system with which a system administrator of an organization utilizing the system can freely define and create all statuses that exist in work, and at the same time, can freely create actions for making transition from a certain status to a next status.

### Means for Solving Problem

The above-described problem is solved by a workflow management device in an embodiment. Here, the workflow management device provides a workflow system to be used by a user for dealing with an item along task processes, wherein the process is expressed as a sequence of statuses between which transition takes place by the user executing an action on a terminal computer, the statuses indicating progression of the item. The workflow management device includes an action element storage section that stores a plurality of action elements serving as processing programs of the smallest unit to make up the action, a section that receives specific information of the action whose execution is allowed when the item is in each of the statuses from a terminal computer of a system administrator for each of the statuses, and stores combination information of specific information of the status and the specific information of the action whose execution is allowed in the status in an action storage section, an action-element register section that receives the specific information of the action and specific information of the action elements making up the action from the terminal computer of the system administrator, and stores combination information of the specific information of the action and the specific information of the action elements making up the action in an action-element storage section, an action display section that selectably displays all the actions extracted by referring to the action storage section with the specific information of the status at the time point as a key on a screen of the terminal computer of the user as the actions executable by the user at the time point, and an action execution section that receives specific information of a selected action selected from the actions executable by the user at the time point from the terminal computer of the user, refers to the action-element storage section with the specific information of the selected action as a key, extracts all the action elements making up the selected action, and executes all the extracted action elements.

The above-described problem is solved by a workflow management method in an embodiment. Here, the workflow management method provides a workflow system to be used by a user for dealing with an item along task processes, wherein the process is expressed as a sequence of statuses between which transition takes place by the user executing an action on a terminal computer, the statuses indicating progression of the item. The workflow management method includes a step of receiving specific information of the action whose execution is allowed when the item is in each of the statuses from a terminal computer of a system administrator for each of the statuses, and storing combination information of specific information of the status and the specific information of the action whose execution is allowed in the status in an action storage section, an action-element register step of receiving the specific information of the action and specific information of action elements making up the action from the terminal computer of the system administrator, and storing combination information of the specific information of the action and the specific information of the action elements making up the action in an action-element storage section, an action display step of selectably displaying all the actions extracted by referring to the action storage section with the specific information of the status at the time point as a key on a screen of the terminal computer of the user as the actions executable by the user at the time point, and an action execution step of receiving specific information of a selected action selected from the actions executable by the user at the time point from the terminal computer of the user, referring to the action-element storage section with the specific information of the selected action as a key, extracting all the action elements making up the selected action, and executing all the extracted action elements.

According to the workflow management device of the present invention formed in such a way, a versatile workflow system capable of managing, visualizing, and promoting efficiency of not only a workflow to route and share a document but all the work from work placement to completion can be provided.

Between the work placement and the end, a state of work flowing between an organization and another organization can be mainly captured, transition of the state of the work taking place over persons, systems, documents and concerned companies from the work placement to the completion can be managed, and a workflow system that is useful for visualization and control of flows of all the work (task) can be constructed.

The user can be notified of a next action, what the user should do next when a certain item is in a certain status, along definition of the task process.

Since the next action can be defined for each task status, the user is only required to select a proper action in accordance with a situation. When transition of the status takes place by execution of the action, a list of preliminarily determined actions for the next status is displayed on the screen of the terminal computer of the user. In such a way, the workflow that one task process progresses toward the completion while transition of the state of the item takes place by the user executing the actions can be realized. Unlike the conventional example, there is no need for taking a means of, when a task flow is systemized, analyzing an actual task flow, developing an individual system screen along definition of the task, and providing a task manual.

Further, the task status and necessary actions can be defined by combining the action elements and applied to various task flows. Regarding the actions, actions along various flows of work including not only application and approval but also an operation request, a report of a unique task, performance (request) of order receipt and placement, and the like can be created by setting by the system administrator.

Progression of the task process can be captured by the number of items remaining in each status or the like, and performance of the organization can be easily measured.

That is, by capturing the workflow on the basis of transition of the state, so called the status, the actions can be made versatile, and monitoring can be performed easily separately for each state. All logs of the states of the item and the actions executed by the user can be recorded in the system provided by the workflow management device of the present invention. Thus, when states of the current item and the logs are gathered, performance of all tasks can be recorded. For example, when items such as a ratio of the number of handling at a first-line window by a help desk that receives end user inquiries, an average of response speed, and a ratio of an escalation to a second-line reception desk are gathered, confirmation can be performed at once. Further, since performance of dealing with the item in the organization can be measured, comparison with key performance indicators (KPI) of the organization can be easily made. This can also contribute to numerical conversion of operation performance at an actual site level that is conventionally not easily visualized.

The action element storage section that stores the plurality of action elements serving as the processing programs of the smallest unit to make up the action is provided. Thus, the action can be defined by combination of the action elements serving as fundamental functions prepared in advance. By making parts versatile in unit of the action elements, the action can be flexibly realized with no programming knowledge.

Favorably, a fixed number of the action elements are provided in the entire workflow system.

With such a configuration, the versatile action elements can be shared over the entire system, and various kinds of actions can be efficiently implemented.

Favorably, a section that receives combination information of specific information of the process and sequence information of the statuses making up the process from the terminal computer of the system administrator, and stores in a status storage section is further provided.

With such a configuration, all statuses that exist in work can be freely defined and created, an action for making transition from a certain status to a next status can be freely created by combining the action elements, and a highly flexible workflow system suitable for all task processes is realized.

Favorably, the action element includes an administration user interface for the system administrator, a runtime user interface for the user, an unique execution program for the action element, the administration user interface is used for setting a set value for changing a behavior of the action element, and includes a setting screen to be displayed on the terminal computer of the system administrator and a set value storage section that stores the set value received from the terminal computer of the system administrator, the runtime user interface includes an input screen part for each action element, the input screen part that receives an input value from the terminal computer of the user at the time of executing the action, and according to need, also includes a confirmation screen part for each action element, the confirmation screen part that displays the input value on the terminal computer of the user for confirmation at the time of executing the action, and the execution program changes the behavior based on the set value and executes the action element by using the input value.

With such a configuration, the action element can be treated as one program part. By combining the action elements treated as the parts, various actions can be easily created.

Favorably, the action register section associates an execution order of the action elements at the time of executing the action with the combination information, and stores in the action-element storage section, and the action execution section successively executes the action elements in an order along the execution order.

With such a configuration, the action element can be treated as one program part. By combining the action elements treated as the parts in various orders, various actions can be easily created.

Favorably, the workflow system is provided to a plurality of organizations between which information confidentiality is ensured.

With such a configuration, by a single or a small number of workflow management devices, a workflow system can be provided to a plurality of organizations such as corporations in a state where information security is ensured between the organizations.

Favorably, an action authority storage section that defines the action utilizable by each user is provided, and the action display section displays only the action whose utilization by the user is allowed in the action authority storage section on the screen of the terminal computer of the user.

With such a configuration, by providing conditions to execute the action in accordance with a role and the contents of the item, definition of the action to be executed by only the authorized user and branching of conditions depending on the state of the item can also be realized. The system can be made along the actual condition where a candidate of the action to be performed next is differentiated depending on the role of the user and the contents of the item for each state of the item.

Favorably, a process storage section that stores the specific information and names of the processes is provided, the plurality of action elements includes an escalation action element that issues an item in another related process from the status being processed, and the escalation action element includes an issue destination receiving section that receives information specifying an issue destination process selected as an issue destination of the status among the processes stored in the process storage section from the terminal computer of the user, and a section that newly creates a related item according to the received issue destination process, associates the related item with the status serving as an issue origin, and stores in an item related storage section.

With such a configuration, the system in which one item progresses over a plurality of task processes in parallel while keeping an association can be constructed. That is, even for one item, different processes are handled by different organizations that handle the task. There is sometimes a case where a plurality of processes exists in one task and is associated with each other. Such an item can be managed by the workflow system.

Further, while respectively unique processes are defined between organizations or between business partners, comprehensive management of the state of one item can be realized.

Conventionally, an approval flow and an individual system divided for each task exist. Thus, there are an enormous increase in desk work, trouble of re-entry of data, development of intersystem coordination, and maintenance cost. However, in the present invention, by issuing the related item by an escalation, while each organization maintains an autonomous process, task management can be performed throughout the work from a start to an end as one item, and communication over the organizations can be realized and a state of the entire work can be captured.

### Effect of the Invention

According to the workflow management device of the present invention, the user can be notified of a next action, what the user should do next when a certain item is in a certain status, along definition of the task process.

Since the next action can be defined for each status, the user is only required to select a proper action in accordance with a situation. When transition of the status takes place by execution of the action, a list of preliminarily determined actions for the next status is displayed on the screen of the terminal computer of the user. In such a way, the workflow that one task process progresses toward the completion while transition of the state of the item takes place by the user executing the actions can be realized. Unlike the conventional example, there is no need for taking a means of, when a task flow is systemized, analyzing an actual task flow, developing an individual system screen along definition of the task, and providing a task manual.

By capturing the workflow on the basis of transition of the state, so called the status, the actions are made versatile, so that monitoring can be performed easily separately for each state. All logs of the states of the item and the actions executed by the user are recorded in the system provided by the workflow management device of the present invention. Thus, when states of the current item and the logs are gathered, performance of all tasks can be recorded. For example, when items such as a ratio of the number of handling at a first-line window by a help desk that receives end user inquiries, an average of response speed, and a ratio of an escalation to a second-line reception desk are gathered, confirmation can be performed at once. Further, since performance of dealing with the items in the organization can be measured, comparison with key performance indicators (KPI) of the organization can be easily made. This can also contribute to numerical conversion of operation performance at an actual site level that is conventionally not easily visualized.

Further, the action can be defined by combination of the action elements serving as fundamental functions prepared in advance. By making parts versatile in unit of the action elements, the action can be flexibly realized with no programming knowledge.

### BRIEF DESCRIPTION OF THE DRAWINGS

Fig. 1 is an entire configuration diagram of a workflow system provided by a workflow management device according to an embodiment of the present invention;
Fig. 2 is a hardware configuration diagram of the workflow management device according to the embodiment of the present invention;
Fig. 3 is an explanatory diagram illustrating a table configuration related to action elements and related screen images;
Fig. 4 is an explanatory diagram of a task framework managed by the workflow system according to the embodiment of the present invention;
Fig. 5 is a category list screen displayed on a terminal computer of a system administrator;
Fig. 6 is a project detail setting screen displayed on the terminal computer of the system administrator;
Fig. 7 is a status setting screen displayed on the terminal computer of the system administrator;
Fig. 8 is an action setting screen displayed on the terminal computer of the system administrator;
Fig. 9 is an action creation screen displayed on the terminal computer of the system administrator;
Fig. 10 is an action element screen displayed on the terminal computer of the system administrator;
Fig. 11 is a start screen displayed on a terminal computer of a user;
Fig. 12 is an item list screen displayed on the terminal computer of the user;
Fig. 13 is a flowchart of action execution processing executed by the workflow management device;
Fig. 14 is a flowchart of the action execution processing executed by the workflow management device;
Fig. 15 is an item detail screen displayed on the terminal computer of the user;
Fig. 16 is an action execution screen displayed on the terminal computer of the user;
Fig. 17 is a flow of processes in a case where an escalation is made from one process to a related process; and
Fig. 18 shows an example in which a corporation deals with inquiries or the like relating to a system that the corporation provides from end users by using the workflow system of the present embodiment.

### DETAILED DESCRIPTION OF THE INVENTION

Hereinafter, an embodiment of the present invention will be described with reference to the drawings. It should be noted that the members, the arrangements, and the like described below do not limit the invention, and may be, of course, modified into various forms in accordance with the spirit of the invention.

In the specification, a "task" indicates a series of operations of work from a start to an end. A "task flow" indicates a flow of the task.

Within one task flow, transition of a state of the work takes place several times from the start to the end of the work. A "status" indicates the state of the item and shows progression.

An "action" indicates each task performed by a user to an item in a certain status.

All the task flows can be expressed by connecting the status and the action, and a set of state transition is called as a "process".

A "workflow" indicates a state transition rule of the item.

### (Workflow Management Device and Hardware Configuration)

A server computer 11 of the present embodiment (hereinafter, referred to as the server 11) serving as a workflow management device provides a workflow system S (hereinafter, referred to as the system S) to a plurality of user organizations.

In the system S provided by the server 11 of the present embodiment, a system administrator of a corporation 2 serving as the user organization that utilizes the system S can freely define and create all statuses that exist in work, and can freely create actions for making transition from a certain status to a next status.

A user of the corporation 2 serving as a user of the system S executes the actions in accordance with a workflow set by the system administrator. The user includes a member of the corporation 2 such as an employee and a top management of the corporation 2 as well as a member of a contractor of the user 2 such as an employee and a top management, an end user such as a customer of the corporation 2, and the like.

The system S of the present embodiment has a design specification in which definition of work actions in all tasks can be versatilely realized with no programming knowledge. All states of the tasks are visualized and what the user in charge of the work should do next is displayed.

In the system S, the state of the work from a start to an end can be managed over a plurality of task processes (organizations). It is thought that the workflow is centered not on a document but on delivery of works and which state these works are in is focused. That is, a state transition model centered on the state of the work is placed on the center of the workflow.

Since a change such as a change in the task process can be quickly handled, even a system administrator who has no actual experience of system programming can change the workflow without program development.

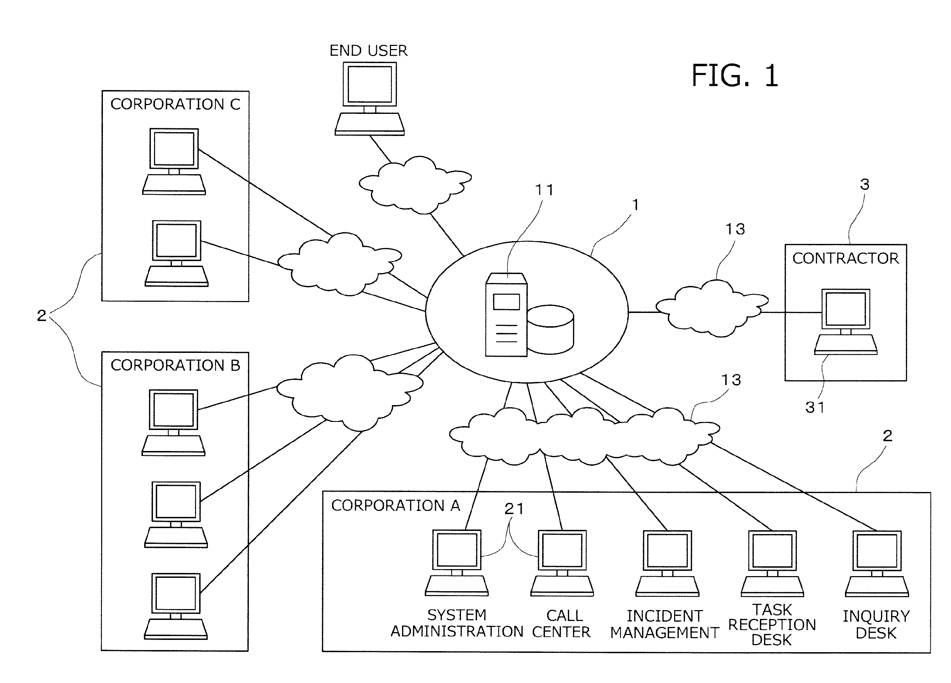

The system S of the present embodiment will be described with reference to Fig. 1.

The system S is constructed between a system provider 1 that operates the system S, a plurality of corporations 2 that utilizes the system S, a contractor 3 to which the corporation(s) 2 outsources a task, other end users, and the like.

The system provider 1 has the server 11 as the workflow management device that provides the system S. It should be noted that although a single server 11 is provided as the workflow management device in the present embodiment, a plurality of servers may be provided or the server may be provided for each corporation 2 to which the system S is provided. Although the server 11 is provided in the system provider 1, the server may be provided in the corporation 2.

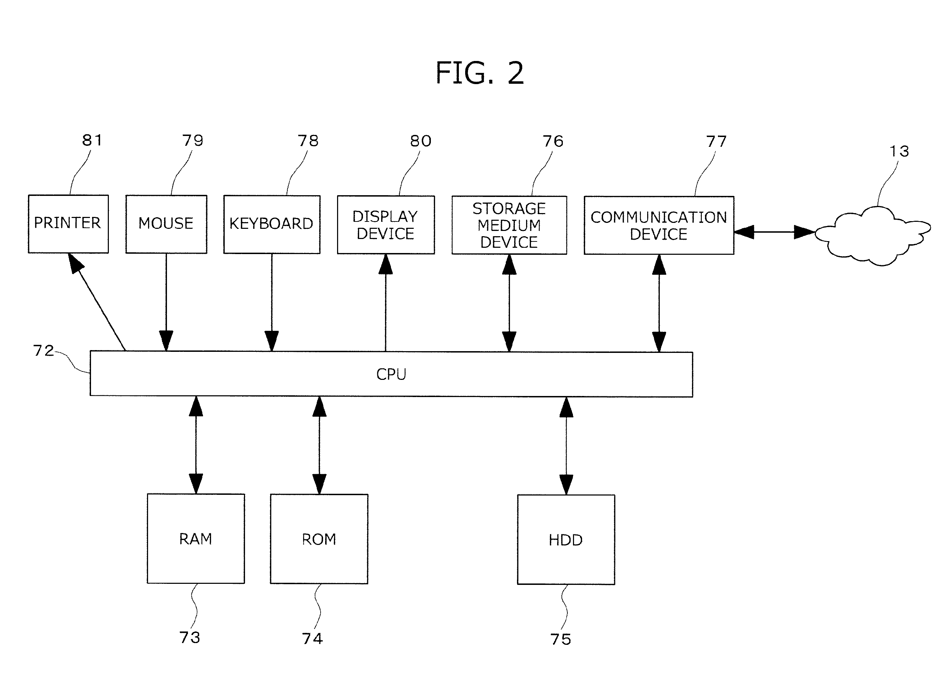

A hardware configuration of the server 11 is shown in Fig. 2.

The server 11 is provided with a CPU 72 serving as a computing and control processing unit of data, and a RAM 73, a ROM 74, a HDD 75, and a storage medium device 76 serving as storage devices.

The CPU 72 executes various processing in accordance with programs stored in the ROM 74 or the HDD 75. Data or the like required for the CPU 72 to execute various processing are stored in the RAM 73.

A keyboard 78 and a mouse 79 serving as input devices are operated when a command is inputted to the CPU 72.

Information, images, and the like displayed in a predetermined format are outputted and displayed onto a display device 80 and a printer 81.

The storage medium device 76 is formed by an external hard disk, a magnetic optical disk, a CD-R, a DVD, a memory stick, or the like, so as to appropriately store data sent via a network 13 and read out the data.

A communication device 77 sends data to the network 13 and receives data supplied via the network 13.

A category table that stores information of project categories, a project table that stores information of projects, a task process table T1 that stores information of processes, a status table T2 that stores information of statuses, an action table T3 that stores information of actions, an action element master table M1 that stores names of the action elements in and out of the system, a role table that stores information relating to the users utilizing the system S and authority of the users, an action authority table, and a role x user table are stored in the HDD 75.

These tables are not divided for each corporation 2 to which the present system S is provided or for each project but information of the pluralities of corporations 2 and projects are mixed up and registered.

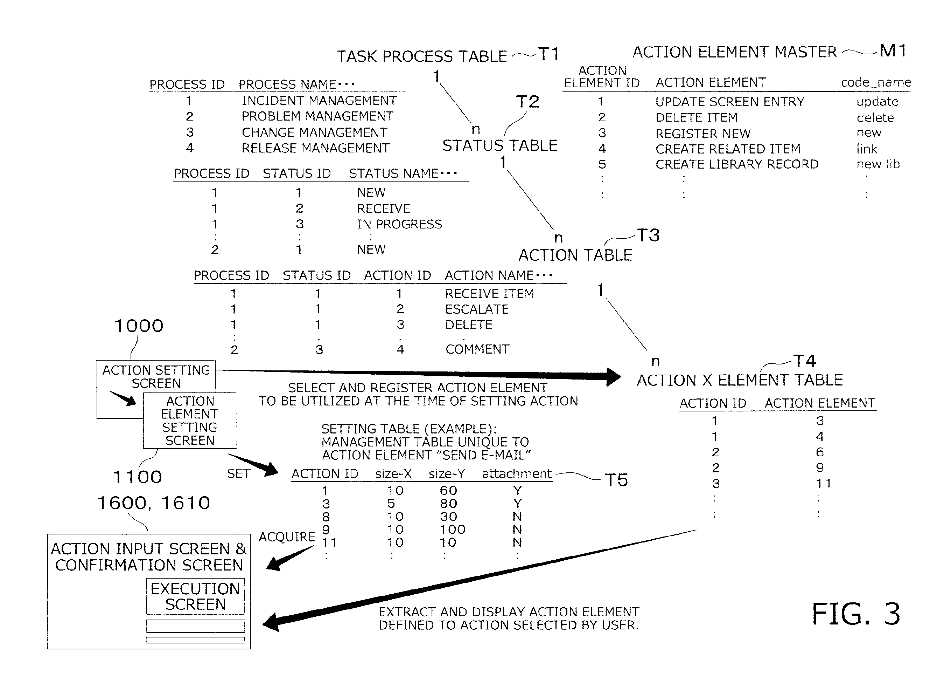

Part of configurations of these tables are shown in Fig. 3.

The category table includes a project category ID, a category name, and a tenant ID as entries.

The project table includes a project ID, the project category ID, a parent project ID, a project name, a project type indicating a difference between a normal project, a parent project, and a child project, and the tenant ID as entries.

The task process table T1 serving as a process storage section includes a process ID, the project ID, a display order, a process name, a process type, and the tenant ID as entries.

The status table T2 serving as a status storage section includes a status ID, the tenant ID, a process or library ID, a status name, the display order, and a completion flag indicating whether or not the status shows completion as entries. The completion flag 1 indicates completion and the completion flag 0 does not indicate completion. Combination of the status ID and the display order corresponds to sequence information of the status.

The action table T3 serving as an action storage section includes the process ID, an action ID, the status ID, an action name, the display order, a consultation flag indicating whether or not a consultation is required, and the tenant ID as entries.

The action element master table M1 serving as an action element storage section is a master table that stores the names of the action elements in and out of the system, and includes an action element ID, an action element screen display name, and an action element intra-system name as entries. Since the action element master table M1 is a common master over the entire system S, the table does not has the tenant ID. The screen display name is a name to be displayed on an administrator screen, and the action element intra-system name is used as a class name of the action element or a folder name that stores a file of the action element.

In the present system, a fixed number of fifteen action elements are stored in the action element master table M1 as follows.
"Create item" is set at the time of registering a new item and only one exists in one process.
"Update item" is set in a case where there is a need for updating screen entries upon an action.
"Delete item" is set at the time of logically deleting the item.
"Aggregate item" is set at the time of aggregating the item.
"Create related item" is set at the time of copying the item or making an escalation to a process.
"Create comment" is set at the time of leaving a comment as a history or utilizing as a main body at the time of sending an E-mail.
"Update status" is set at the action requiring status update.
"Send E-mail" is set at the time of sending an E-mail upon execution of the action.
"Create library" is set at the time of registering an item of a related library.
"Update library" is set at the time of updating item data of the library associated with the item.
"Relate record" is set at the time of relating items to each other.
"Update library in one go" is set at the time of updating a plurality of records of the related library in one go.
"Call other system SOAP method" is set at the time of calling a method defined in other system implemented in accordance with SOA (service oriented architecture) or a service bus product.
"Start measurement of operation time" is set at the time of recording the time when the action is executed in item information.
"Finish measurement of operation time" is set at the time of recording the finish time corresponding to the time when measurement is started by the action element "start measurement of operation time".

In the present embodiment, a fixed number of fifteen action elements are provided. However, action elements can be added if necessary. By increasing versatilely utilizable action elements, a new element can be added to all the actions to be executed from all the statuses of the task process. Once the action element is prepared, the action element can be actively used in all scenes of the present system S. Thus, functions of the added action element can be used in all scenes of the task.

The number of the action elements can be increased/decreased. However, the number is preferably a fixed and standardized number in the entire system S.

An action x element table T4 serving as an action-element storage section is a table that stores information of the action elements included in the action, and includes a record ID automatically given by the system, the action ID, an action element ID, an execution order serving as an order of the action elements executed at the time of pressing down an action completion button, a display order serving as an order at the time of displaying views associated with the action elements on an initial screen/confirmation screen, and the tenant ID as entries.

An action setting table T5 is a table that stores setting information at the time of executing the action set by the system administrator of the corporation 2, and registers a record for each of the action elements of the respective set actions. The action setting table T5 includes the record ID automatically given by the system, the tenant ID, the library ID, a status update condition, a comment column horizontal width, a comment column vertical width, an E-mail template ID, the project ID, the status ID, a process type ID, the action ID, and the like as entries.

The action serving as an operation to be performed by the user for each status of the work is not always one. Like branching of conditions and implementation of parallel tasks, there is a need for selecting a plurality of next actions for one status. Therefore, in order to let n-actions correspond to one status, in setting of the action, there is a need for creating a plurality of actions for a status of the work defined in one task process.

For example, when the status of the item is "pending approval", there is a need for at least two next actions of "approve" and "reject". According to circumstances, like "take it public by E-mail", "enter comment", "partly correct item content", and "update existing related database", the need for performing a plurality of actions for the item in the status of "pending approval" is generated.

The role table is a table that sets whether or not a particular item group and a history group are disclosed to the user, and includes a role ID, the project ID, a role name, a history disclosure/non-disclose initial value flag (1: disclosure, 0: non-disclosure), a non-disclosure history display flag (1: disclosure, 0: non-disclosure), an item disclosure/non-disclosure initial value flag (1: display, 0: non-display), a non-disclosure item display flag (1: disclosure, 0: non-disclosure), and the tenant ID as entries.

The action authority table is a table for regulating utilization of the action and controlling display of the action in accordance with a role of the user, and includes an action authority ID, the role ID, the action ID, the process type ID, and the tenant ID as entries.

The role x user table is a table that defines an affiliated user of each role, and includes a role x user ID, the role ID, a user ID, the project ID, and the tenant ID as entries.

The role table and the role x user table correspond to action authority storage section.

A related item table is a table that stores a state where an escalation of the process is made and a related issue destination item is issued from the issue origin item, and includes an issue origin item ID and an issue destination item ID as entries.

The HDD 75 stores an administration screen storage section that stores an administration screen (setting_ui) serving as an administration user interface, a runtime user screen storage section that stores a runtime user screen (activity-ui) serving as a runtime user interface, and an execution program storage section that stores an execution program (exec-logic).

The action element has an additionally extensible part to be versatilely used having an information input screen for the user and an execution code of a logic execution part, and always holds three functions of the administration screen (setting_ui), the runtime user screen (activity-ui) (register and confirmation), and the execution program (exec-logic). The three functions are execution programs, and the action element can be considered as a small system having UIs, named in association with the action element intra-system name (code_name).

As long as a mode of this program interface is provided, the action element can be individually extended and developed and can be executed at the same time together with a plurality of action elements on one action execution screen.

The action element once developed can be registered to all the actions and a characteristic to be utilized can be obtained by setting in accordance with a task scene.

The administration screen (setting_ui) includes master tables unique to the action elements that hold setting parameters for each action element, the setting parameters serving as set values for changing behaviors of the action elements at the time of creating the action, and setting screens. The master table unique to the action element is respectively named in association with the action element intra-system name (code_name), and the setting screen is respectively named as action element intra-system name (code-name) + "setting".

Thereby, the setting information can be held and the parameter can be held individually for each action element. The set value suitable for the characteristic of the action is registered on the setting screen.

The runtime user screen (activity-ui) includes an input screen (act-UI) part that receives an input of an input value from the user at the time of executing the action by the user, and a confirmation screen (conf-UI) part.

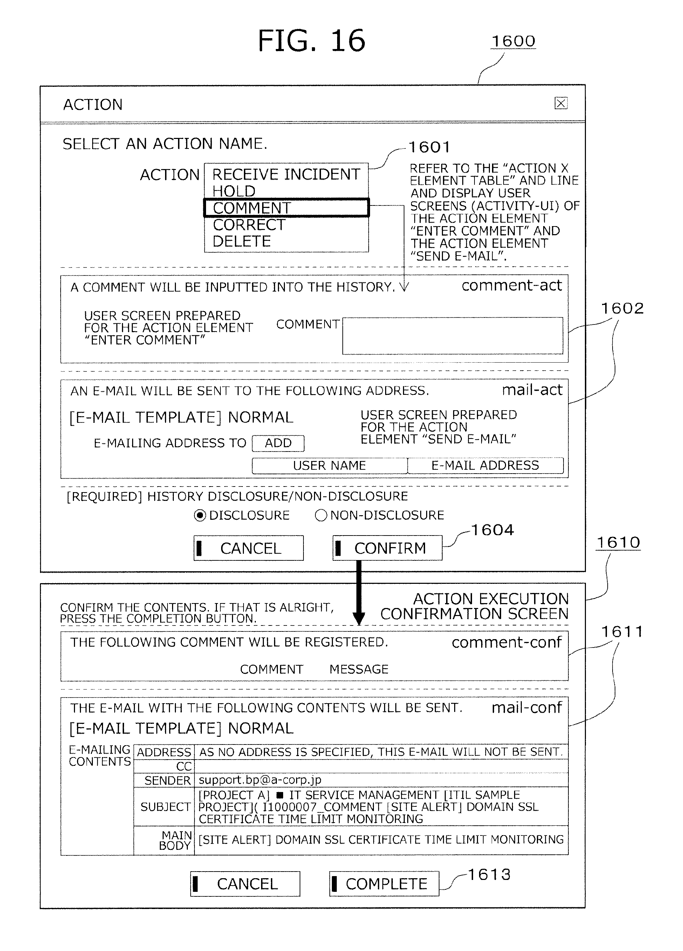

The input screen (act-UI) part is a screen creation program named as 'code_name' + "act". By lining as many screen creation programs as the number of definition of the action element and displaying in order, the screen creation programs are used for displaying an action execution screen 1600 of Fig. 16.

The confirmation screen (conf-UI) part is a confirmation screen program of the action element named as 'code_name' + "conf".

The execution program (exec-logic) is an execution logic code processed at the time of executing the action by the user. As the execution program, programs named as 'code name' + "exec" are executed in order.

The program named as 'code_name' + "exec" is a program that has a standard execute () method and receives arguments defined as input variables in HTML. The program executes the action element in accordance with the setting information unique to the action element that is defined on the setting screen and set for the action.

Terminal computers 21, 31 (hereinafter, referred to as the "terminals") used by members of the corporation 2 such as employees are respectively installed in the corporation 2 and the contractor 3, and information can be sent and received between the terminals and the server 11 via the network 13. Since a hardware configuration of the terminals 21, 31 is the same as the hardware configuration of the server 11, description thereof will be omitted. The terminals 21, 31 include all information processing devices capable of displaying information received from the server 11 on a screen and sending the information inputted on the screen to the server 11 such as a PC, a personal digital assistance (PDA), a tablet computer, a cellular phone, and a smartphone.

### (Task Framework)

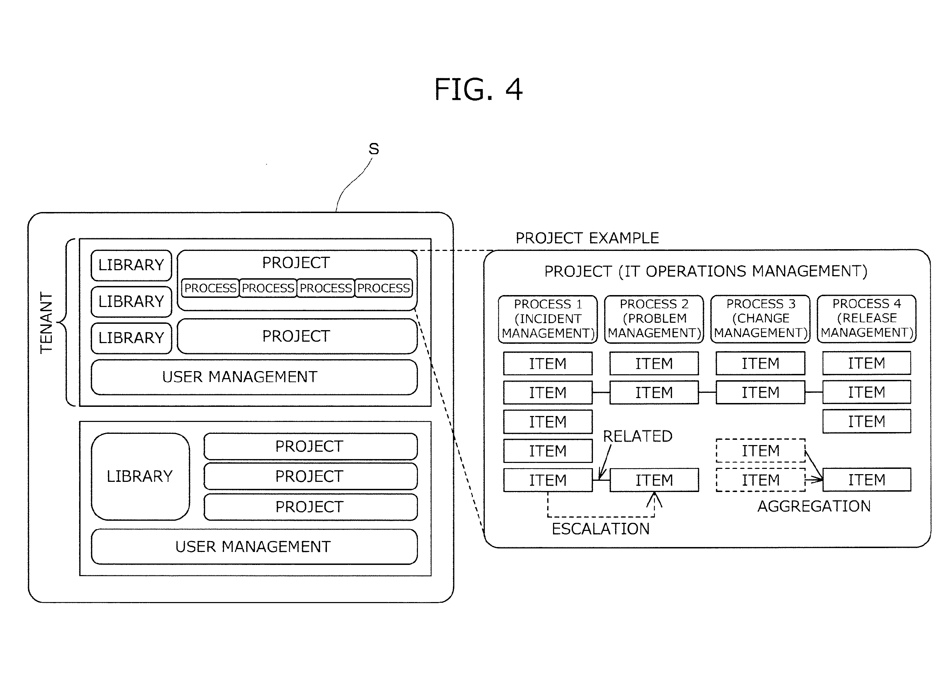

A task framework managed by the system S is shown in Fig. 4.
A "tenant" indicates a unity of projects and libraries.
A "project" indicates one unity of process/member/group/role/report/event/related library/library/user group.
An "item" indicates a task unit to be managed in a process. A plurality of items can be related to each other or aggregated as one item.
An "escalation" indicates that the item is moved from one process to another. By the escalation, an item is created in an escalation destination process and related to the item of the escalation origin. The item related is called as the "related item".
A "library" is a data list of administration entries. A set of the entries registered in the library is called as an "item".
A "process" is definition of a series of operation processes. A function that divides contents of the "process" by case is called as a "process type".
The process type can be selected at the time of dealing with the item, and by switching, selective display of the screen entries, a change in status transition, and the like can be performed.
A "status" indicates a state of a lifecycle of the process itself. For each one "status", an operable "action" can be defined. The "status" can be changed and contents of the item can be updated at the time of executing the action.
For the "action", a "role" with which the action is executable is defined. Thereby, such control that only the role having a specific authority can change the status can be performed.
In addition to the "action", the "role" can perform setting for each process type, detail setting for each screen entry, and the like.
Each one "action" can be set from a preliminarily determined "action element". On the administration screen, such setting that a name of the action is changed and a plurality of elements is added to one action can be performed.

### (Functions of Workflow System S)

Functions of the system S of the present embodiment will be described. In the system S of the present embodiment, by connecting each status of the item executed by the user to the action to be performed next, the system administrator of the corporation 2 provides a workflow setting stage of setting a workflow to be executed by the user and a workflow execution stage in which the user executes the workflow set by the system administrator.

In the workflow setting stage, by accessing the server 11, associating the action with the status from the administration screen displayed on the screen of the terminal 21, and defining this action with combination of the action elements, the system administrator sets the action to be performed next to each status.

### (Workflow Setting by System Administrator)

Hereinafter, the workflow setting stage will be described in detail.

When the system administrator starts up the program of the system S on the terminal 21, the terminal 21 accesses the server 11 and a login screen (not shown) is displayed. When a tenant code and an ID and a password of the system administrator are inputted on the login screen, a front page of the administration screen (not shown) is displayed.

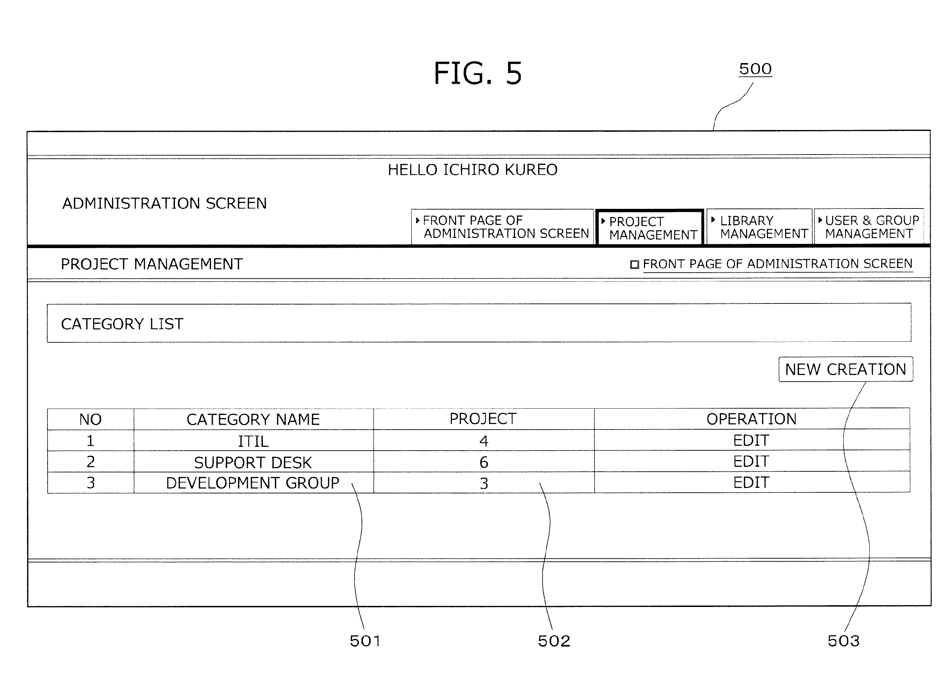

When a project management tab among buttons selectably displayed on the front page of the administration screen (not shown) is clicked, the server 11 refers to the category table and the project table with the tenant ID of the tenant to which the relevant system administrator is affiliated as a key, acquires a project category ID to which the tenant ID is attached, a category name, and information of the project, and displays a category list screen 500 shown in Fig. 5.

The category list screen 500 is a screen that lists category names of the entire tenant to which the system administrator is affiliated, and displays category name display fields 501, category-inclusive project number display fields 502, and a new creation button 503 for displaying a category new creation screen (not shown) for newly creating a category.

A category described in the category name display field 501 is newly created by inputting the category name and clicking a completion button (not shown) on the category new creation screen.

When the project number display field 502 is clicked, by using the information of the project acquired upon displaying the category list screen 500, a project list screen (not shown) that lists and displays project names included in the category is displayed. On this screen, a new creation button for displaying a project new creation screen (not shown) for newly creating a project is displayed.

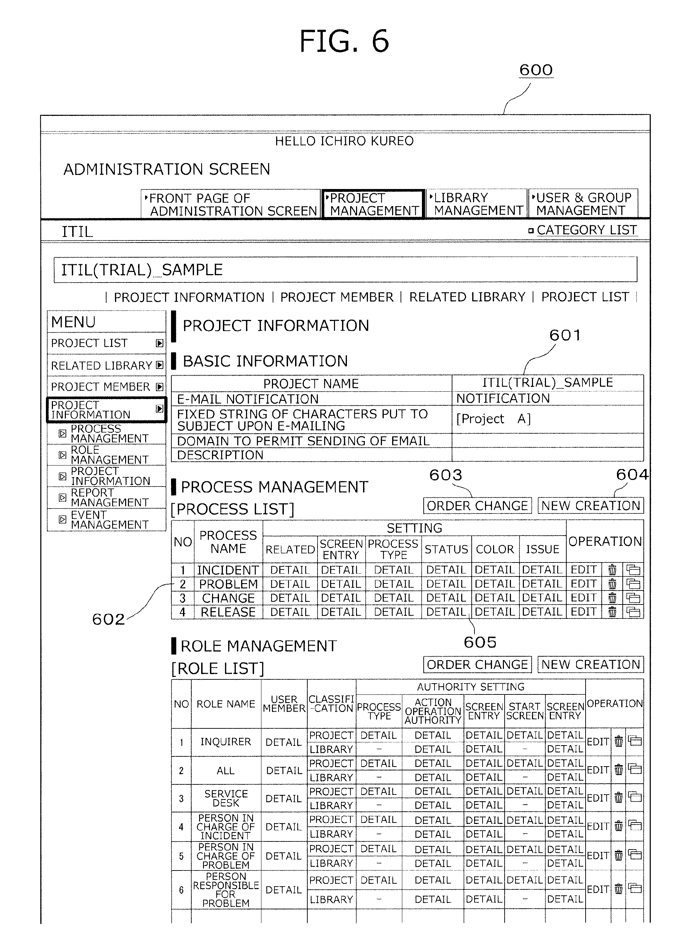

When any of the project names is clicked on this project list screen (not shown), the project table is referred to with the project name as a key and a project ID is acquired, the task process table T1 is referred to with this project ID as a key and information of processes included in the project is acquired, and a project detail setting screen 600 of Fig. 6 is displayed.

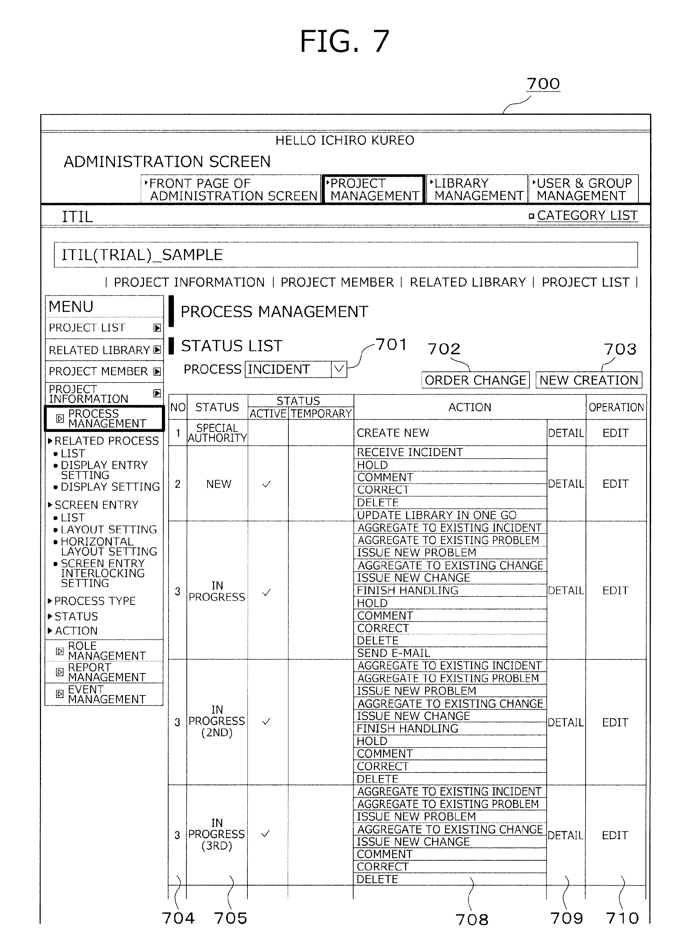

The project detail setting screen 600 is a screen that performs detail setting of the project, and displays a project basic information display field 601, a project-inclusive process list 602, an order change button 603 of the processes in the project, a process new creation button 604, and a status detail button 605 for displaying a status setting screen 700 of Fig. 7. When the new creation button 603 is clicked, a process new creation screen (not shown) for newly creating a process is displayed.

When the status detail button 605 is clicked, the server 11 refers to the status table T2 with the process ID as a key, further refers to the action table T3 with the status ID obtained in the status table T2 as a key, and displays the status setting screen 700 of Fig. 7.

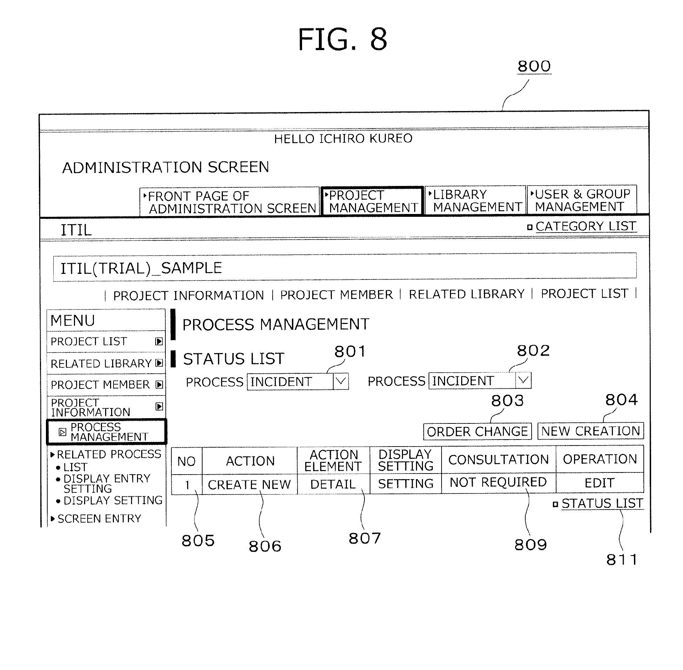

The status setting screen 700 is a screen for performing setting of the status, and as shown in Fig. 7, displays a process selection box 701 for selecting a process to be set from a list, an order change button 702 for displaying an order setting screen (not shown) for setting an order of the statuses included in the process, a new creation button 703 for displaying a status screen (not shown) for newly creating statuses included in the process, number fields 704 showing status IDs automatically given by the system, status name display fields 705, action lists 708 each of which is set for each status, action setting buttons 709 for displaying an action setting screen 800 of Fig. 8, and operation buttons 710 for editing the statuses.

When the new creation button 702 is clicked, the server 11 displays the status creation screen (not shown) on the terminal 21, and when a completion button is clicked on this screen, the server associates the status name inputted on the screen with an ID of the process selected in the process selection box 701 and registers in the status table T2. This processing corresponds to a section that stores in the status storage section in the embodiments.

When the action setting button 709 is clicked on the status setting screen 700, the server 11 displays the action setting display 800 of Fig. 8 by using the status name of the clicked action setting button 709 and information of the action ID and the action name associated with the status.

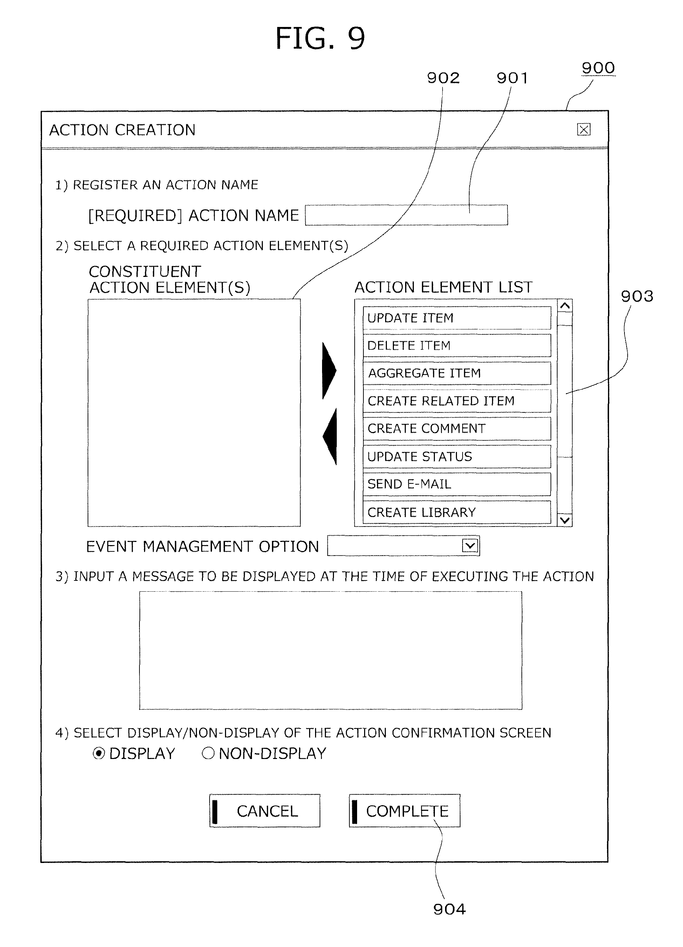

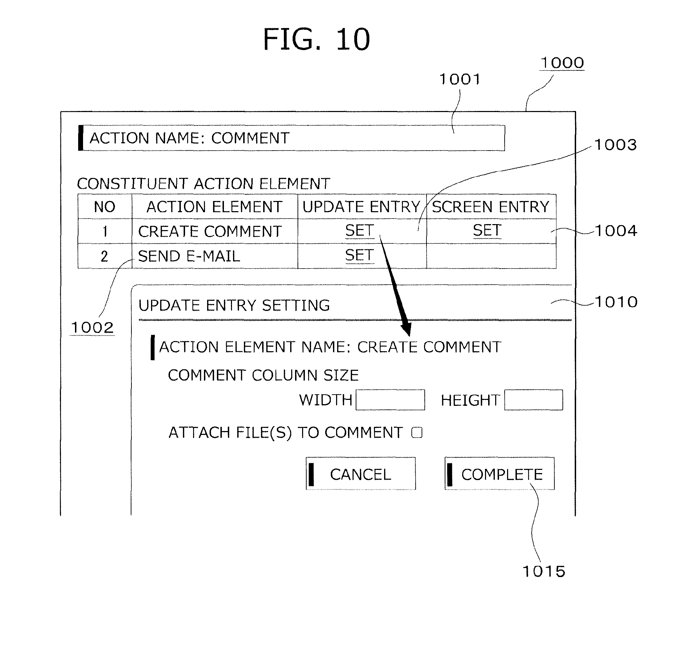

The action setting screen 800 is a screen for performing setting of the action, and as shown in Fig. 8, displays a process selection box 801 for selecting a process to be set from a list, a status selection box 802 for selecting a process-inclusive status from a list, an order change button 803 for displaying an order setting screen (not shown) for setting an order of the actions association with the status, a new creation button 804 for displaying an action creation screen 900 of Fig. 9 for newly creating and associating an action with the status, number fields 805 showing action IDs automatically given by the system, action name display fields 806, action element buttons 807 for displaying an action element screen 1000 of Fig. 10 for setting action elements that make up the action, consultation buttons 809 for setting whether or not a consultation is set, and a status list display button 811 for displaying the status setting screen 700 of Fig. 7.

When the new creation button 804 is clicked, the server 11 refers to the action element master table M1 and displays the action creation screen 900 of Fig. 9.

The action creation screen 900 displays an action name input field 901, an action element selection field 902 for displaying the action elements selected on the screen by the system administrator, an action element list 903 for selectably displaying names of all the action elements acquired from the action element master table M1, and a completion button 904 for completing action creation.

When an action element is selected in the action element selection field 902 of the action creation screen 900 and the completion button 904 is clicked, the server 11 acquires an action element ID of the action element inputted in the action element selection field 902. With the tenant ID as a key, the server conducts search on the action x element table T4 and acquires maximum values of the record ID and the action ID. The server associates numerical values of the "maximum values + 1" as the record ID and the action ID with the action element ID and registers in the action x element table T4. The server performs the same processing for all the action elements inputted in the action element selection field 902 and registers in the action x element table T4. This processing corresponds to an action-element register section.

The server registers the relevant status ID, the action ID, the action name, and the like in the action table T3.

When the action element button 807 of any of the actions is clicked on the action setting screen 800 of Fig. 8, the server refers to the action x element table T4 with the action ID of the selected action as a key, acquires the record ID and the action element ID associated with the action, refers to the action element master table M1 with this action element ID as a key, acquires a screen display name and an intra-system name of the corresponding action element, and displays the action element screen 1000 of Fig. 10.

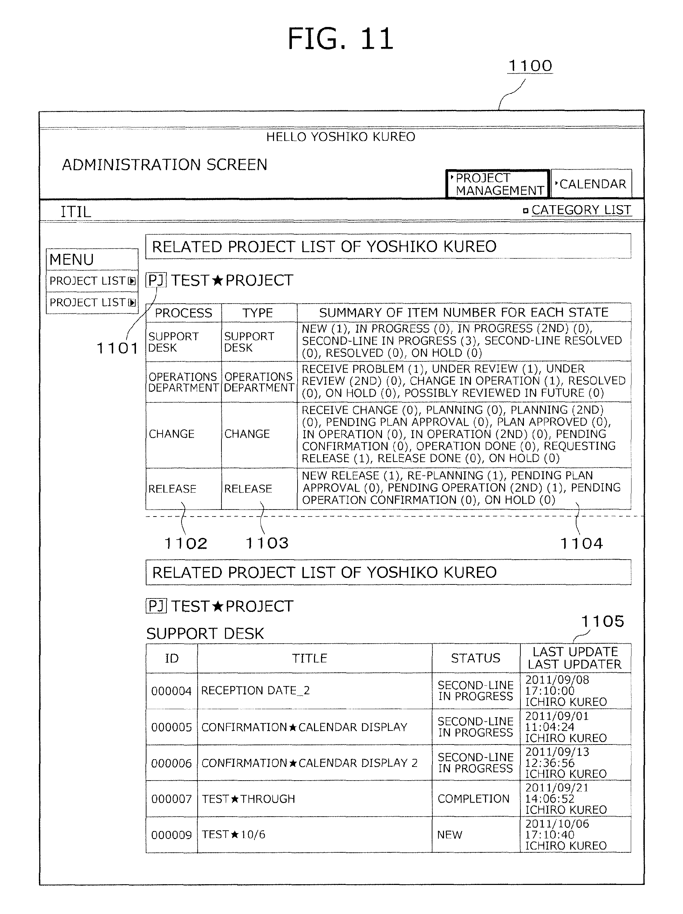

The action element screen 1000 is a screen for setting an update entry to be updated when the user executes the action on the terminal 21, and a screen entry to be displayed on the screen of the terminal 21 of the user. The action element screen 1000 displays a relevant action name display field 1001, action element display fields 1002 for displaying IDs and screen display names of the action elements included in the relevant action, update entry setting buttons 1003 for displaying an administration screen 1100 of Fig. 11 for setting an update entry of each action element, and screen entry setting buttons 1004 for displaying a screen entry setting screen (not shown) for setting a screen entry of each action element.

When the update entry setting button 1003 is clicked, the server 11 refers to the action element master table M1 with the action element ID of the action element whose update entry setting button 1003 is clicked as a key, and acquires an intra-system name of the action element. Next, the server acquires an administration screen named as 'infra-system name + "setting"' from the administration screen storage section and displays on the screen of the terminal 21.

A unique administration screen is provided for each action element. Fig. 10 shows an administration screen 1010 named as "new setting" to be displayed by clicking the update entry setting button 1003 of the action element "create item".

When a completion button 1015 is clicked on the administration screen 1010, the server 11 registers information inputted on the administration screen 1010 in the action setting table T5.

### (Execution of Workflow by User)

Next, the workflow execution stage in which the user executes the workflow set by the system administrator will be described.

When the user starts up the program of the system S on the terminal 21, the terminal 21 accesses the server 11 and a login screen (not shown) is displayed. When the tenant code and an ID and a password of the user are inputted on the login screen, the server 11 refers to the role x user table and the role table with the tenant code and the user ID as a key, and displays the start screen 1100 of Fig. 11 corresponding to a role of the user.

The start screen 1100 is a screen for listing and displaying the project, the processes, and the statuses relevant to the user, and displays a project display field 1101, process display fields 1102, process type display fields 1103, status display fields 1104 for displaying the statuses and the number of items of the relevant statuses, and an item list area 1105 for listing and displaying the items of the process.

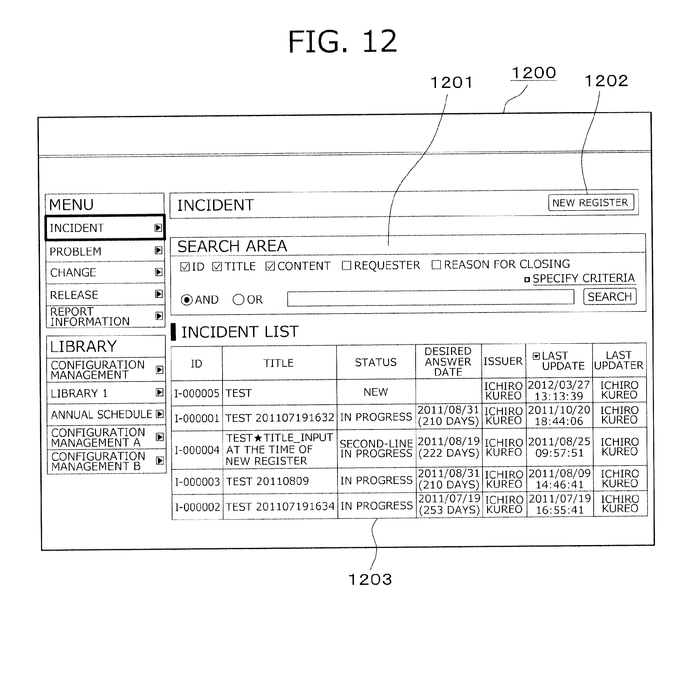

When a process or a process type name of the process display field 1101 or the process type display field 1103 is clicked, the server 11 displays an item list screen 1200 of Fig. 12.

The item list screen 1200 is a screen for listing and displaying items of the designated process, and displays an item search area 1201, a new register button 1202 for newly registering an item in the relevant process, and an item list 1203 for listing and displaying the items of the process to be displayed.

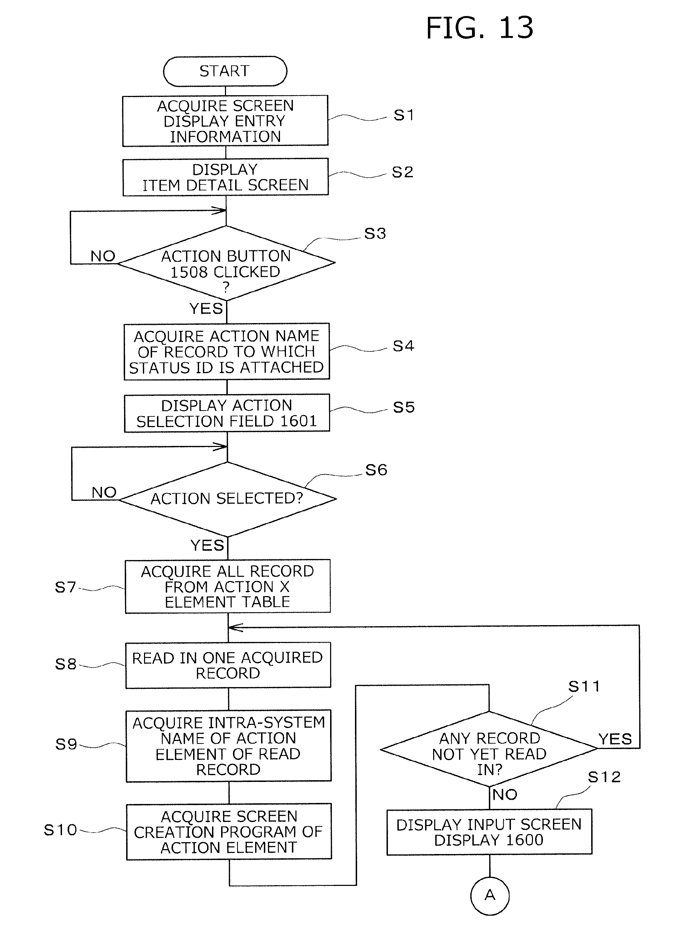

When the item ID of any of the items displayed in the item list 1203 is clicked, the server 11 starts action execution processing of Fig. 13. In Step S1, the server 11 refers to the status table T2 with the clicked item ID as a key, acquires the status ID, the status name, the display order, and the completion flag, and acquires screen display entry information of the item from the task process table T1 and a process screen entry information table that stores the screen display entry information unique to the process.

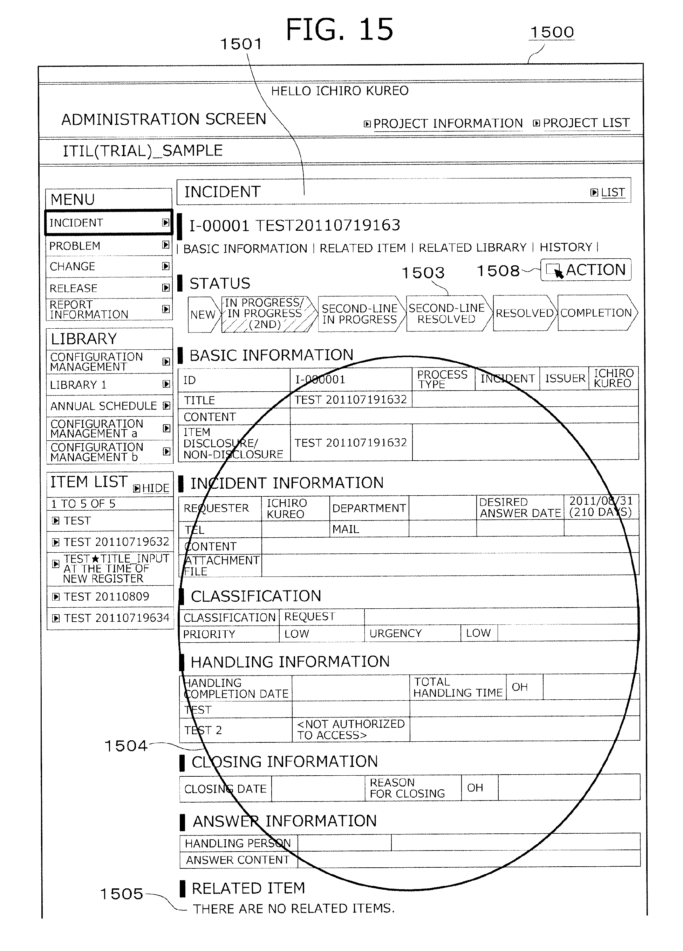

Next, in Step S2, by using the information acquired in Step S1, an item detail screen 1500 of Fig. 15 is displayed.

The item detail screen 1500 displays an item title display field 1501 that includes the process name, a relevant item status display field 1503, an item screen entry information display field 1504, a relevant item related item display field 1505, and an action button 1508 for displaying an action selection screen of Fig. 15.

The status display field 1503 displays the status of the item by using all the status names associated with the process ID of the item in the status table T2, the display order thereof, and the completion flag.

In accordance with definition of the task process, as in "new", "receive", "in progress", "second-line in progress", "second-line resolved", "completion" of the status display field 1503, the status of the item is changed in accordance with progression of the item. Regarding one item, transition takes place from the initial status to completion as defined for the task process. By expressing the task flow as transition of the status, definition of the action serving as the next action is easily performed. There is also an advantage to easily monitor a situation of the entire task process such as in which state the item remains.

In Step S3, it is determined whether or not the action button 1508 is clicked.

In a case where the action button 1508 is not clicked (Step S3: NO), the flow returns to Step S3 and it is determined whether or not the action button 1508 is clicked. That is, Step S3 is repeated until the action button 1508 is clicked.

In a case where the action button 1508 is clicked in Step S3 (Step S3: YES), in Step S4, the action table T3 is referred to with the tenant ID and the status ID acquired in Step S1 as a key, and the action IDs of all the records to which the tenant ID and the status ID are attached, the action names, and the display order are acquired. With the acquired action IDs and the user ID as a key, the action authority table and the role x user table are referred to, so as to confirm whether or not utilization of the actions by the user is regulated.

Next, in Step S5, by using the information of the action names and the display order acquired in Step S4, an action selection field 1601 of Fig. 16 that lists the actions whose utilization by the user is allowed is displayed. Step S5 corresponds to an action display section of the embodiments.

The action selection field 1601 is a list that selectably displays all the action names associated with the status of the relevant item at the time point by the system administrator in the display order set in the action table T3.

In the present embodiment, by regulating utilization of the preliminarily determined task processes or actions in such a way, display of the actions is controlled in accordance with the role of the user. By setting execution conditions of the actions in accordance with the role or the contents of the item, definition of the action to be executed by only the authorized user and branching of the conditions depending on the state of the item can also be realized. The system can be made along the actual condition where a candidate of the action to be performed next is differentiated depending on the role of the user and the contents of the item for each state of the item.

For example, regarding an action to be executed by only an authorizer, the action is selectable when the user has an authorizer role, or regarding an action to be executed by only a person in charge of purchasing, the action is selectable when the user has a role of the person in charge of purchasing.

A condition to display the relevant action may be held in an UI of the action selection field 1601, so that only the utilizable action is displayed at the time of displaying the action selection field 1601.

For example, regarding an item related to more than a fixed amount of money, in a case where a decision maker is different or the like, search conditions of the administration entries of the item can be preliminarily held on the UI as business rules, and when all check entries in the item are done, the next action can be executed.

Next, in Step S6, it is determined whether or not any of the actions is selected in the action selection field 1601.

In a case where no action is selected (Step S6: NO), the flow returns to Step S6 and it is determined whether or not an action is selected. That is, Step S6 is repeated until an action is selected.

In a case where an action is selected (Step S6: YES), in Step S7, the action x element table T4 is referred to with the tenant ID and the action ID as a key, and all the records associated with the selected action are acquired.

Next, in Step S8, one of the records acquired in Step S7 is read in.

Next, in Step S9, the action element master table M1 is referred to with the action element ID of the record read in Step S8 as a key, and all the action element intra-system name (code_name) is acquired.

In Step S10, the runtime user screen storage section is referred to with the name of 'infra-system name (code_name) + "act"' as a key and the screen creation program (activity-ui) of the action element of the record read in Step S8 is acquired.

Next, in Step S11, it is determined whether or not there is any record not yet read in among the records acquired in Step S7.

In a case where there is a record not yet read in among the records acquired in Step S7 (Step S11: YES), in Step S8, one record next to the record already read in among the records acquired in Step S7 is read in.

That is, the steps of Steps S8 to S11 are repeated until all the records acquired in Step S7 are read in.

In a case where there is no record not yet read in among the records acquired in Step S7 (Step S11: NO), on the premise that the screen creation programs of all the action elements associated with the action are already acquired, the flow proceeds to Step S12. In accordance with the order fixed by the execution order of the action elements which are included in the records acquired in Step S7, all the screen creation programs acquired in repeatedly performed Step S10 are executed and the input screen 1600 of Fig. 16 is displayed.

In this step, for example, in a case where the code_name of the action element "enter comment" is set as "comment" and the code_name of the action element "send E-mail" is set as "mail", the screen creation program comment-act and the screen creation program mail-act are executed in order and displayed in line on the screen.

The input screen 1600 displays the action selection field 1601 for displaying the list of the actions currently utilizable in the relevant item, input fields 1602 for inputting and selecting necessary entries regarding the action elements making up the action, and a confirmation button 1604 for displaying an action confirmation screen 1610. Display contents of the action selection field 1601 are differentiated depending on the authority, the setting, the process, or the status. Display contents of the input fields 1602 are differentiated depending on the selected action, the authority, the setting, the process, or the status.

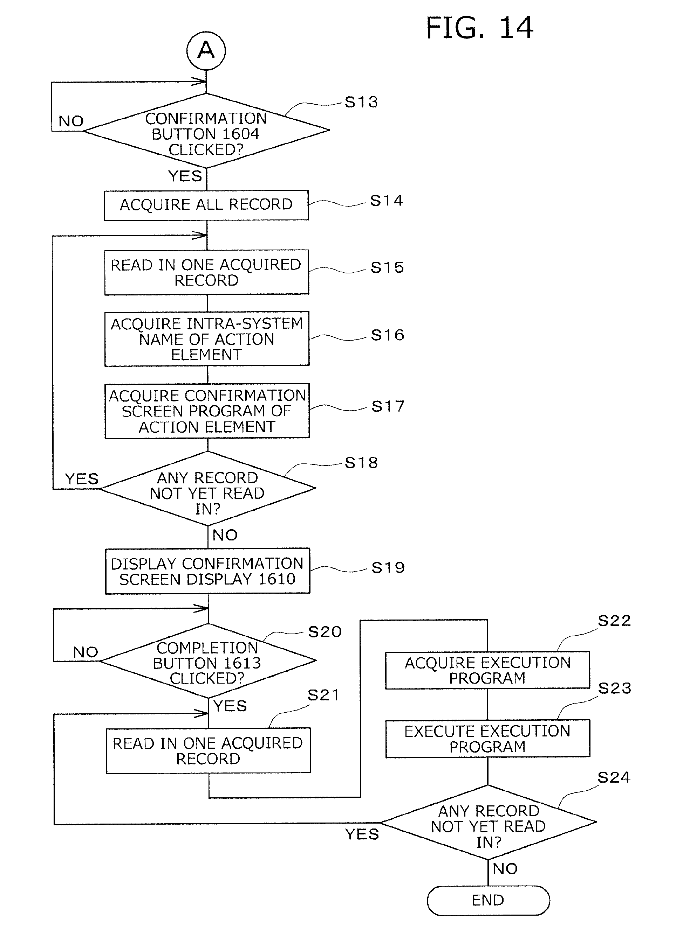

Next, the flow proceeds to Step S13 of Fig. 14 through A of Fig. 13 to A of Fig. 14, and it is determined whether or not the confirmation button 1604 is clicked.

In a case where the confirmation button 1604 is not clicked (Step S13: NO), the flow returns to Step S13 and it is determined whether or not the confirmation button 1604 is clicked. That is, Step S13 is repeated until the confirmation button 1604 is clicked.

In a case where the confirmation button 1604 is clicked in Step S13 (Step S13: YES), in Step S14, the action x element table T4 is referred to with the tenant ID and the action ID as a key, and all the records associated with the selected action are acquired.

Next, in Step S15, one of the records acquired in Step S14 is read in.

Next, in Step S16, the action element master table M1 is referred to with the action element ID of the record read in Step S15 as a key, and all the action element intra-system name (code_name) is acquired.

In Step S17, the runtime user screen storage section is referred to with the name of 'intra-system name (code_name) + "conf"' as a key and the confirmation screen program of the action element read in Step S15 is acquired.

Next, in Step S18, it is determined whether or not there is any record not yet read in among the records acquired in Step S14.

In a case where there is a record not yet read in among the records acquired in Step S14 (Step S18: YES), in Step S15, one record next to the record already read in among the records acquired in Step S14 is read in.

That is, the steps of Steps S15 to S18 are repeated until all the records acquired in Step S14 are read in.

In a case where there is no record not yet read in among the records acquired in Step S14 (Step S18: NO), on the premise that the confirmation screen programs of all the action elements associated with the action are already acquired, the flow proceeds to Step S19 and parameters inputted in the input fields 1602 are handed over from 'code_name' + "act" to 'code_name' + "conf". In accordance with the order fixed by the execution order of the action elements which are included in the records acquired in Step S14, the confirmation screen programs acquired in repeatedly performed Step S17 are executed and the confirmation screen 1610 of Fig. 16 is displayed.

Hand-over of the parameters is executed by handing over input contents to input tags of HTML by the POST method. A parameter name attached to the input tag is made up of the action element ID + the ID of the parameter unique to the action element, so that the name is not the same as parameters of the other action elements.

The confirmation screen 1610 displays confirmation fields 1611 for displaying results of inputting and setting in the input fields 1602, and a completion button 1613 for executing the action.

Next, in Step S20, it is determined whether or not the completion button 1613 is clicked.

In a case where the completion button 1613 is not clicked (Step S20: NO), the flow returns to Step S20 and it is determined whether or not the completion button 1613 is clicked. That is, Step S20 is repeated until the completion button 1613 is clicked.

In a case where the completion button 1613 is clicked in Step S20 (Step S20: YES), in Step S21, one of the records acquired in Step S14 is read in.

Next, in Step S22, the action element master table M1 is referred to with the action element ID of the record read in Step S21 as a key, and all the action element intra-system name (code_name) is acquired. The execution program storage section is referred to with the name of 'intra-system name (code_name) + "exec"' as a key by using this action element intra-system name (code_name), and the execution program of the action element of the record read in Step S21 is acquired.

Next, in Step S23, the execution program of the action element acquired in Step S22 is executed. For example, the "comment-exec" program records the parameters inputted on the input screen 1600 by the user in a comment table of the relevant item. The "mail-exec" program sends an E-mail in accordance with the contents (such as an address, a subject, and contents) inputted on the input screen 1600 by the user.

In Step S24, it is determined whether or not there is any record not yet read in among the records acquired in Step S14.

In a case where there is a record not yet read in among the records acquired in Step S14 (Step S24: YES), in Step S21, one record next to the record already read in among the records acquired in Step S14 is read in.

That is, the steps of Steps S21 to S24 are repeated until all the records acquired in Step S14 are read in.

In a case where there is no record not yet read in among the records acquired in Step S14 (Step S24: NO), on the premise that execution of the execution programs of all the action elements associated with the action is already completed, the flow of the action execution processing of Fig. 14 is finished. Steps S21 to S24 correspond to an action execution section of the embodiments.

### (Implementation Examples of Three Function Elements of Action Element)

As described above, the action element has the three functions of the administration screen (setting_ui), the runtime user screen (activity-ui) (register and confirmation), and the execution program (exec-logic).

A display example of the administration screen (setting_ui) is the administration screen 1010 of Fig. 10, and a display example of the runtime user screen (activity-ui) (register and confirmation) is the input screen 1600 and the confirmation screen 1610 of Fig. 16. Implementation examples of the three functions will be specifically described.

With the action element "update status", the setting_ui holds the information of the next status of transition at the time of executing the action. The activity-ui does not obtain any input from the user. The activity-ui notifies the user that from which status to which status transition takes place by displaying on the screen. The exec-logic makes transition of the item to the status designated by the setting_ui at the time of executing the action.

With the action element "update content of administration entry", the setting_ui sets which administration entry is updated at the time of executing the action. The activity-ui displays a user interface that receives an input to the screen entry to be updated. The activity-ui displays a confirmation screen for confirming the data inputted by the user. The exec-logic updates the administration entry data of the item with the contents inputted in the activity-ui.

With the action element "send E-mail", the setting_ui has a template of a main body of an E-mail to be sent, a user interface on which addresses of the E-mail can be set, and setting database. The activity-ui has a user interface on which a delivery address can be selected at the time of executing the action. The activity-ui displays a confirmation screen of the E-mail to be sent. The exec-logic sends the E-mail with the contents defined in the setting_ui as designated in the activity-ui.

With the action element "post comment history on item", the setting_ui designates the number of letters put to the item, attachment of files, and the like. The activity-ui displays an input field for inputting a comment. The exec-logic puts the comment inputted to the item to a history of the item.

### (Action Implementation Example)

Next, an implementation example of a case where the action "approve" is defined by combining the four action elements of "update status", "update content of administration entry", "send E-mail", and "post comment history on item" will be described. It should be noted that only functions will be described in this implementation example. Since specific processing by the server 11 for realizing the implementation example is the same as the processing in the paragraphs (Workflow Setting by System Administrator) and (Execution of Workflow by User), description thereof will be omitted.

In the example in which the action "approve" is created from the status of "pending approval", the action "approve" is newly created at first, and the four action elements of "update status", "update content of administration entry", "send E-mail", and "post comment history in item" are selected.

Next, parameters that determine behaviors of operations are set in each action element. Setting of the parameters is performed in order to set a unique meaning for the specified action to the versatile action elements. The unique action is realized by combining the versatile action elements with the parameters.

In the "update status", transition from the transition origin status "pending approval" to the transition destination status "approved" is set. In the "update content of administration entry", an authorizer name is inputted as the administration entry of the item. In the "send E-mail", E-mailing to an applicant is set and text of the E-mail is preliminarily designated.

The action set as above is executed as follows.

Execution of the action is divided into a user interface part in which the executable action defined for each status of the item can be selected from the screen of the item, a user interface part to be displayed when the list of the actions is selected, and a logic part to be processed at the time of execution.

When a certain item is selected on the screen of the terminal 21 of the user, the server 11 displays the relevant status on the screen of the terminal 21. In accordance with the preliminarily set definition, the server displays a menu of the actions to be utilized in the relevant status.

When the user selects one of the actions, the activity-ui defined to the action elements which are put to the action are listed on the input screen.

With the action element "update status", a message notifying the user that the status is changed from "pending approval" to the transition destination status "approved" is displayed. With the action element "update content of adm:inistration entry", the authorizer name is displayed and an input UI of the administration entry that can be inputted in accordance with the preliminary setting is additionally displayed. With the "send E-mail", the text and the address of the E-mail to be sent are displayed. With the "post comment history on item", the input field of the comment is displayed.

When an execution button of this action is pressed down on the screen of the terminal 21, the server 11 performs processing of execution logics defined to the action elements in order. With the action element "update status", transition takes place to the status "approved". With the action element "update content of administration entry", the administration entry is updated. With the "send E-mail", the E-mail is sent. With the "post comment history on item", the comment is added to the item.

The actions can be defined in various other forms.

for example, the action "record telephone contact content" can be defined by making transition from the "waiting phone call" to the "call ended" with the action element "update status", inputting a person in charge of the phone call, selecting a talk script utilized at the time of the phone call, and describing contents of hearing at the time of the call with the action element "update content of administration entry", and entering a comment if there is a highly important point with the action element "post comment history on item". At this time, the action element "send E-mail" is not used.

At this time, preparing for a case where the phone call from the status of "waiting phone call" is not successful, the action "make phone call again" can be created in advance. This action can be defined by making transition from the "waiting phone call" to the "scheduled to make phone call again" with the action element "update status", recording a call time and the like with the action element "send E-mail", and entering a comment if there is a highly important point with the action element "post comment history on item".

### (Issuing Related Item by Escalation)

As an action of the present embodiment, an action "escalate" can be created. The "escalate" indicates to issue, from one process, a related item in another or plural other related processes. Thereby, the processes are related and the item can be associated with the related process.

Another item issued in the related process is called as the "related item".

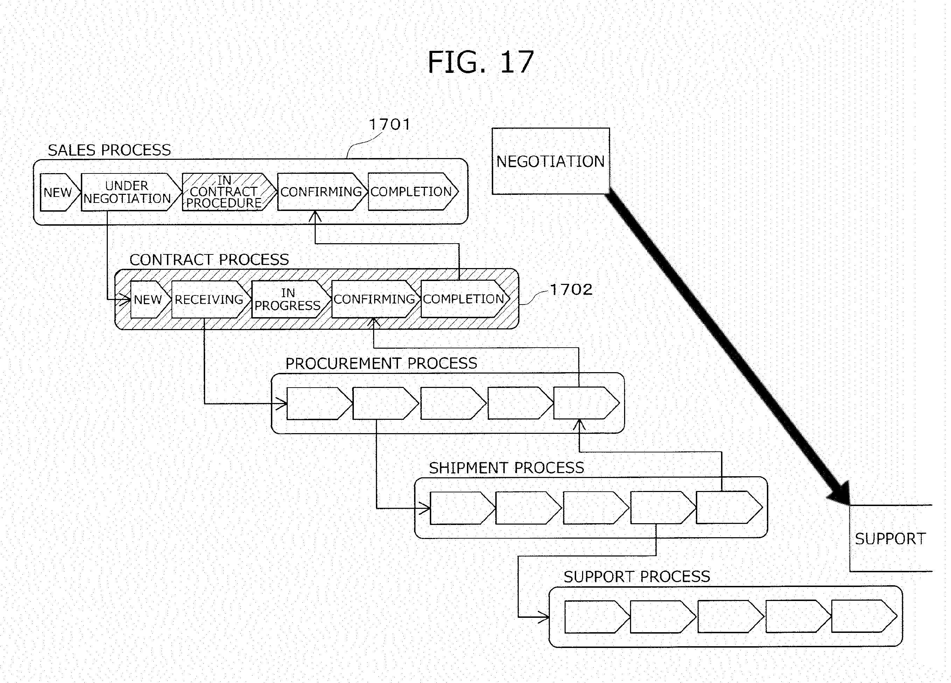

Fig. 17 shows a flow of the processes in a case where an escalation is made from one process to the related processes.

By executing an action capable of issuing a related item 1702, the related item 1702 is created. In this case, an item 1701 in the issue origin process and the related item 1701 in the issue destination exist in parallel.

The process expresses work handled by one organization from a start to an end. In many cases in fact, intermediate tasks may be partially outsourced to the outside contractor 3 or a set of task procedures may be performed by another department. In this case, for example, a process for the related organization is created, so that an item can be issued from the first process.

Even when the related item 1702 is issued from the first process, transition takes place from the status of the first process to a status defined in the first status. At this time, the status of the first process remains in a non-active state such as "in escalation".

Meanwhile, regarding the related item 1702, from a start state such as "new", the action is executed in accordance with the process to let the task progress.

For example, there are plural task processes like a sales process, a contract process, a procurement process, a shipment process, to a support process, and the task processes are related to each other. On the system S, the item generated from the sales is recognized as one item up to the support.

In the present system S, after contract documents such as a NDA and an order note are received in the sales process, an item related to the contract process may be issued.

The action "start contract procedure" at this time is created by combining five action elements of "update status" (making transition from "under negotiation" to "in contract procedure"), "create comment" (entering a contract date and the like in a negotiation process item), "send E-mail" (sending a notification E-mail to a person in charge of contract), "create comment" (entering a comment at the time of the contract), and "create related item" (issuing a new item of the contact process) in this order.

With the action element "create related item" (issuing a new item of the contract process), the setting_ui selects the issue destination process and sets a screen entry to be newly registered to the issue destination. The activity-ui displays a new register screen of the issue destination task process. The exec-logic creates related item data in which the issue origin item and the issue destination item are associated. This related item data includes the item ID of the issue origin item and the item ID of the issue destination item, and the exec-logic registers this related item data in the related item table.

Thereby, in a case where the action "start contract procedure" is prepared for the status "under negotiation" and transition takes place to the "in contract procedure" in the sales process, a new item of the contract process is created at the same time.

The issue origin item and the related item progress in separated statuses in the respectively independently defined processes. This is because the role is differentiated for each process. For the user who undertakes respectively separated pieces of work even in the same item, a highly easy-to-understand specification is provided. As in the "in contract procedure" for the sales process and the "receiving" for the person in charge of the contract, the status is differentiated depending on the task process even in the same item.

In such a way, business processes can be organized by relating the processes and advanced labor division can be realized.

### (Action Element calling Other System or the like)

The action element "call other system SOAP method" for sending a message to other system may be added to the action "start contract procedure".

In this case, after the "create related item" (issuing a new item of the contract process), the action element "call other system SOAP method" (registering the amount of contract and product description information in a sales management system) is added.

With the action element "call other system SOAP method", the setting_ui defines a call target method and defines parameters required for the call for a related system developed in accordance with SOA. The activity-ui inputs parameters to be handed over to other system. The exec-logic communicates with other system by using the SOAP protocol and calls the method prepared in other system.

By setting this action element into a proper action of the task, at the same time as the user executes the action, the information is disseminated in the related system, so that operations that the user should log into other system and transfer the information can be reduced to a great extent.

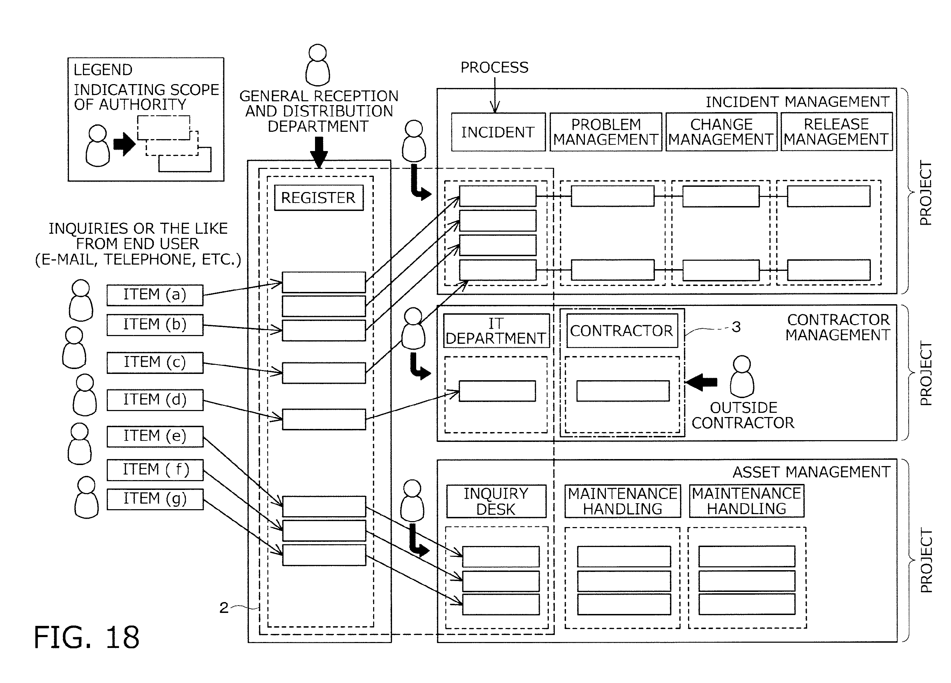

According to the above system S, as shown in Fig. 18, a workflow system for a large-scale project which is divided into plural subsystems can be freely constructed by setting of the system administrator.

Fig. 18 shows an example in which the corporation 2 deals with inquiries or the like relating to a system that the corporation provides from the end users by using the present system S.

The inquiries or the like from the end users are received by a general reception and distribution department of the corporation 2, and by selecting an action in the action selection field 1601 of Fig. 16 in accordance with the contents, brought to any of the projects of incident management, outsource management, and asset management within the corporation 2 or in the outside contractor 3.

### Reference Numerals

- S: workflow system
- 1: system provider
- 2: organization
- 3: contractor
- 11: server computer
- 21, 31: terminal computer

## Claims

1. A workflow management device that provides a workflow system to be used by a user for dealing with an item along task processes, wherein the process is expressed as a sequence of statuses between which transition takes place by the user executing an action on a terminal computer, the statuses indicating progression of the item,
the workflow management device comprising:
an action element storage section that stores a plurality of action elements serving as processing programs of a smallest unit to make up the action;
a section that receives specific information of the action whose execution is allowed when the item is in each of the statuses from a terminal computer of a system administrator for each of the statuses, and stores combination information of specific information of the status and the specific information of the action whose execution is allowed in the status in an action storage section;
an action-element register section that receives the specific information of the action and specific information of the action elements making up the action from the terminal computer of the system administrator, and stores combination information of the specific information of the action and the specific information of the action elements making up the action in an action-element storage section;
an action display section that selectably displays all the actions extracted by referring to the action storage section with the specific information of the status at a time point as a key on a screen of the terminal computer of the user as the actions executable by the user at the time point; and
an action execution section that receives specific information of a selected action selected from the actions executable by the user at the time point from the terminal computer of the user, refers to the action-element storage section with the specific information of the selected action as a key, extracts all the action elements making up the selected action, and executes all the extracted action elements.

2. The workflow management device according to claim 1, wherein
a fixed number of the action elements are provided in the entire workflow system.

3. The workflow management device according to claim 1 or 2, further comprising:
a section that receives combination information of specific information of the process and sequence information of the statuses making up the process from the terminal computer of the system administrator, and stores in a status storage section.

4. The workflow management device according to any of claims 1 to 3, wherein
the action element comprises an administration user interface for the system administrator, a runtime user interface for the user, an unique execution program for the action element,
the administration user interface is used for setting a set value for changing a behavior of the action element, and comprises a setting screen to be displayed on the terminal computer of the system administrator and a set value storage section that stores the set value received from the terminal computer of the system administrator,
the runtime user interface comprises an input screen part for each action element, the input screen part that receives an input value from the terminal computer of the user at the time of executing the action, and according to need, also comprises a confirmation screen part for each action element, the confirmation screen part that displays the input value on the terminal computer of the user for confirmation at a time of executing the action, and
the execution program changes the behavior based on the set value and executes the action element by using the input value.

5. The workflow management device according to any of claims 1 to 4, wherein
the action register section associates an execution order of the action elements at the time of executing the action with the combination information, and stores in the action-element storage section, and
the action execution section successively executes the action elements in an order along the execution order.

6. The workflow management device according to any of claims 1 to 5, wherein
the workflow system is provided to a plurality of organizations between which information confidentiality is ensured.

7. The workflow management device according to any of claims 1 to 6, comprising:
an action authority storage section that defines the action utilizable by each user, wherein
the action display section displays only the action whose utilization by the user is allowed in the action authority storage section on the screen of the terminal computer of the user.

8. The workflow management device according to any of claims 1 to 7, comprising:
a process storage section that stores the specific information and names of the processes, wherein
the plurality of action elements comprises an escalation action element that issues an item in another related process from the status being processed, and
the escalation action element comprises:
an issue destination receiving section that receives information specifying an issue destination process selected as an issue destination of the status among the processes stored in the process storage section from the terminal computer of the user; and
a section that newly creates a related item according to the received issue destination process, associates the related item with the status serving as an issue origin, and stores in an item related storage section.

9. A workflow management method that provides a workflow system to be used by a user for dealing with an item along task processes, wherein
the process is expressed as a sequence of statuses between which transition takes place by the user executing an action on a terminal computer, the statuses indicating progression of the item,
the workflow management method comprising:
a step of receiving specific information of the action whose execution is allowed when the item is in each of the statuses from a terminal computer of a system administrator for each of the statuses, and storing combination information of specific information of the status and the specific information of the action whose execution is allowed in the status in an action storage section;
an action-element register step of receiving the specific information of the action and specific information of action elements making up the action from the terminal computer of the system administrator, and storing combination information of the specific information of the action and the specific information of the action elements making up the action in an action-element storage section;
an action display step of selectably displaying all the actions extracted by referring to the action storage section with the specific information of the status at a time point as a key on a screen of the terminal computer of the user as the actions executable by the user at the time point; and
an action execution step of receiving specific information of a selected action selected from the actions executable by the user at the time point from the terminal computer of the user, referring to the action-element storage section with the specific information of the selected action as a key, extracting all the action elements making up the selected action, and executing all the extracted action elements.

10. The workflow management method according to claim 9, wherein
before the step of storing in the action storage section,
a step of receiving combination information of specific information of the process and sequence information of the statuses making up the process from the terminal computer of the system administrator and storing in a status storage section is performed.

11. The workflow management method according to claim 9 or 10, wherein
in the action register step, an execution order of the action elements at a time of executing the action is associated with the combination information and stored in the action-element storage section, and
in the action execution step, the action elements are successively executed in an order along the execution order.
